# EUROPÄISCHE PATENTSCHRIFT

(11) **EP 4 096 943 B1**
(45) Veröffentlichungstag und Bekanntmachung des Hinweises auf die Patenterteilung: **29.11.2023**
(21) Anmeldenummer: 21709382.2
(22) Anmeldetag: 01.03.2021
(51) Int. Cl.: B60G 11/26, B60G 17/056, B60G 99/00, B62D 33/06, F16F 9/096, F16F 9/46, B60G 17/015, F15B 11/16

(54) **HYDROPNEUMATISCHES FEDERUNGSSYSTEM FÜR FAHRZEUGE**
HYDROPNEUMATIC SUSPENSION SYSTEM FOR VEHICLES
SYSTÈME DE SUSPENSION HYDROPNEUMATIQUE POUR VÉHICULES

(30) Priorität: 02.04.2020 DE 102020002124
(43) Veröffentlichungstag der Anmeldung: 07.12.2022
(73) Patentinhaber: Hydac Mobilhydraulik GmbH, Sulzbach/Saar (DE)
(72) Erfinder: ANTON, Marc, 66333 Völklingen (DE)
(74) Vertreter: Bartels und Partner, Patentanwälte
(86) Internationale Anmeldenummer: PCT/EP2021/055041
(87) Internationale Veröffentlichungsnummer: WO 2021/197736

(56) Entgegenhaltungen:
- EP-A1- 2 380 422
- DE-A1- 4 324 289
- DE-A1-102004 040 636
- DE-A1-102015 007 075

## Beschreibung

Die Erfindung betrifft ein hydropneumatisches Federungssystem für Fahrzeuge, nach dem Oberbegriff des Anspruchs 1, zumindest bestehend aus einer Achsfederung und einer Kabinenfederung, die zu ihrer Versorgung mit Druckfluid an eine Druckversorgungsquelle anschließbar sind. Ein Beispiel eines solchen hydropneumatischen Federungssystem ist aus der DE 43 24 289 A1 bekannt.

Aus der DE 10 2004 040 636 A1 ist eine Achsfederungsvorrichtung für Fahrzeuge mit sich ändernden Lastverhältnissen bekannt. Die Vorrichtung ist ausgestattet mit: zwei Federungszylindern, die jeweils Druckräume aufweisen; einem Load-Sensing-System zur Druckerzeugung; einer zwei Hauptzweige bildenden Versorgungsleitung zwischen diesen Räumen und einem Pumpen- sowie einem Tankanschluss und einer Niveauregulierung. In jeden Hauptzweig sind zwei Ventile geschaltet. Eines der Ventile im ersten Hauptzweig ist ein Druckregelventil, über das die Druckeinstellung für den jeweiligen vorgebbaren Druckraum des jeweiligen Federungszylinders und die Niveauregulierung erfolgt, wofür das Druckregelventil mittels einer Steuereinrichtung elektrisch ansteuerbar ist.

Aus der DE 10 2015 007 075 A1 ist ein Dämpfungssystem in Form einer hydraulischen Kabinenfederung bekannt. Das System ist ausgestattet mit einem hydraulisch ansteuerbaren, ein- und ausfedernden Differenzialzylinder und mit einem an den Differenzialzylinder aufseiten seines Kolben- und seines Stangenraumes angeschlossenen Hydrospeicher. Der Kolben- und der Stangenraum des Differentialzylinders sind über ein Proportional-Drosselventil und zwei Rückschlagventile derart miteinander verbunden, dass sowohl beim Ein- als auch beim Ausfahren des Zylinderkolbens im Wesentlichen nur das Differenzvolumen aus Kolben- und Stangenraum über das Proportional-Drosselventil im Betrieb des Systems geführt ist. Dadurch ist eine proportionale Dämpfung für den jeweiligen Differentialzylinder erreicht.

Eine derart ausgebildete Achsfederungsvorrichtung und eine derart ausgebildete Kabinenfederung werden in der Praxis regelmäßig als hydropneumatisches Federungssystem für ein Fahrzeug eingesetzt, indem diese in Form jeweils einer getrennt voneinander arbeitenden Baugruppe mit eigener Fluidversorgung nebst zugehöriger Ventilsteuerung am Fahrzeug verbaut werden, was das Bereitstellen von entsprechendem Einbauraum am Fahrzeug notwendig macht.

Der Erfindung liegt die Aufgabe zugrunde, das bekannte hydropneumatische Federungssystem dahingehend zu verbessern, dass dieses Einbauraum sparend, in energieeffizienter Weise und mit hoher Regelungsdynamik betreibbar ist.

Eine dahingehende Aufgabe ist durch ein erfindungsgemäßes hydropneumatisches Federungssystem für Fahrzeuge, mit den Merkmalen des Patentanspruchs 1 in seiner Gesamtheit gelöst.

Gemäß dem kennzeichnenden Teil des Patentanspruchs 1 ist das erfindungsgemäße hydropneumatische Federungssystem dadurch gekennzeichnet, dass mittels einer Ansteuerungseinrichtung gemeinsam sowohl die Achsfederung als auch die Kabinenfederung steuerbar sind und dass mittels einer Prioritätserkennung unter Einbezug einer Sensoreinrichtung für die jeweilige Federung, bedarfsabhängig vorrangig die eine Federung vor der jeweils anderen Federung mit Druckfluid versorgt ist.

Dadurch sind - im Gegensatz zu dem aus dem Stand der Technik bekannten Federungssystem - die Achsfederung und die Kabinenfederung in einem gemeinsamen Federungskonzept zusammengefasst. Abhängig von den mittels der Sensoreinrichtung erfassten Sensordaten erlaubt die Prioritätserkennung, regelmäßig realisiert durch eine Rechner- oder Computereinheit, welche der beiden Federungen vorrangig mit dem Versorgungssfluid mit einem vorgebbaren Druck zu versorgen ist, um deren Funktion in optimaler Weise sicherstellen zu können. Aufgrund der zentralen Prioritätserkennung, die entsprechend die Ansteuereinrichtung betätigt, lässt sich dann mit deutlich reduziertem Regelaufwand bei verringerter hydraulischer Antriebsleistung die Ansteuerung für die beiden Federungen vornehmen. Darüber hinaus lässt sich durch das Zusammenfassen der Federungssysteme für Achse und Kabine in einem gemeinsamen, miteinander verschalteten Ansteuerkonzept der Aufwand für hydraulische Leitungen im Rahmen der benötigten Verschaltung, sowie die hydraulische Pumpenleistung und der benötigte Umfang an Steuerventilen reduzieren, was den benötigten Einbauraum am Fahrzeug reduzieren hilft.

Durch das angesprochene Reduzieren der Teilevielfalt für das hydropneumatische Federungssystem ist auch das Gewicht reduziert und aufgrund der Anpassung der jeweiligen Federung, insbesondere im Rahmen einer Niveauregulierung, über die Prioritätserkennung kommt es zu keinem unerwünschten Überlappungseffekt respektive zu Interferenzen.

In einem bevorzugten Ausführungsbeispiel ist vorgesehen, dass die Ansteuerungseinrichtung aus einem einzelnen Steuerblock gebildet ist mit mindestens jeweils einem Nutzanschluss für die zugehörige Federung sowie einem Druckversorgungs- und einem Rücklaufanschluss. Dadurch ist die Anzahl von Fluidleitungen möglichst gering gehalten, wodurch auch der Montageaufwand für das Federungssystem reduziert ist.

In einem weiteren bevorzugten Ausführungsbeispiel ist vorgesehen, dass die jeweilige Federung zumindest einen hydraulischen Arbeitszylinder mit einer Kolben-Stangeneinheit aufweist, deren Position mittels der Sensoreinrichtung in Form mindestens eines Wegsensors überwacht ist. Dadurch ist anders als bei einer hydraulischen Zustandsüberwachung mittels Druckwertesensoren unmittelbar über die Wegsensoren das Ein- und Ausfederungsverhalten für den jeweiligen Arbeitszylinder erfasst, was Rückschlüsse zulässt betreffend die Dynamik des Fahrzeug-Dämpfungs-und Federungssystems als Ganzes.

In einem weiteren bevorzugten Ausführungsbeispiel ist vorgesehen, dass sowohl der Kolben- als auch der Stangenraum eines Arbeitszylinders flüssigkeitsseitig an mindestens einen Hydrospeicher angeschlossen sind, der mit seiner gasseitigen Vorspannung das Feder-Dämpfer-Verhalten für den jeweiligen Arbeitszylinder vorgibt. Aufgrund der dahingehenden Verschaltung, bei dem die Hydrospeicher unmittelbar auf Änderungen im Kolben-Stangenraum eines Arbeitszylinders reagieren können, ist eine hohe Dynamik des Federungssystems als Ganzes erreicht.

In einem weiteren bevorzugten Ausführungsbeispiel ist vorgesehen, dass die Prioritätserkennung zwecks Ansteuern der Ansteuereinrichtung für die Arbeitszylinder über eine Rechnereinheit verfügt, die die Sensordaten der Sensoreinrichtung auswertet, die vorzugsweise neben den Wegsensoren mindestens eine Drucküberwachungseinrichtung für zumindest Teile des hydraulischen Versorgungskreises der Steuereinrichtung aufweist. Dadurch ist die Positionsüberwachung der Arbeitszylinder mittels der Weg- oder der Positionssensoren aufgrund der Drucküberwachungseinrichtung in redundanter Weise überprüfbar.

In einem weiteren bevorzugten Ausführungsbeispiel ist vorgesehen, dass die Steuereinrichtung über einzelne Steuerventile, vorzugsweise 2/2-Wegeventile, verfügt, die einem jeweiligen Arbeitszylinder zugeordnet von einem Zentralventil, vorzugsweise in Form eines 3/2-Wegeventiles, ausgehend mit Druckfluid versorgt sind. Dadurch ist das Federungssystem mittels Standardbauteilen einfach und kostengünstig herstellbar und zudem verbessern die angesprochenen, schnell schaltenden Wegeventile weiter die Gesamtdynamik des Federungssystems.

In einem weiteren bevorzugten Ausführungsbeispiel ist vorgesehen, dass die Arbeitszylinder der Achsfederung sowohl kolben- als auch stangenseitig permanent fluidführend miteinander verbunden sind und dass für die Zu- und Abfuhr von Fluid betreffend die Achsfederung die Arbeitszylinder sowohl kolben- als auch stangenseitig an jeweils ein Steuerventil angeschlossen sind. Hierdurch ist der Verschaltungsaufwand unter Einsatz von hydraulischen Leitungen verringert.

In einem weiteren bevorzugten Ausführungsbeispiel ist vorgesehen, dass die Kabinenfederung mittels eines weiteren Steuerventils ausgehend von dem Zentralventil mit Fluid versorgbar ist oder eine Druckentlastung in Richtung des Rücklaufanschlusses erfährt. Hierdurch ist mittels der einzelnen Weg- oder Schaltventile eine in Ventilbaugruppen unterteilte Schaltlogik für die Federung erreicht, was die Funktionssicherheit erhöht.

In einem weiteren bevorzugten Ausführungsbeispiel ist vorgesehen, dass die Druckfluidversorgung des jeweiligen Arbeitszylinders nach Betätigen des zuordenbaren Steuerventiles mit dem Druck der Druckversorgungsquelle erfolgt und das zwecks Abfuhr von Druckfluid aus dem jeweiligen Arbeitszylinder dies über eine Blende oder Drossel verzögert erfolgt. Über eine solche Blende oder Drossel, die auch verstellbar ausgeführt sein kann, lässt sich der Rückfluss von Arbeitsfluid aus den Zylindern in Richtung Tank entsprechend androsseln, was bei Absenkvorgängen auch im Rahmen der Niveauregulierung die Geschwindigkeit des Einfahrens der Arbeitszylinder reduzieren hilft.

In einem weiteren bevorzugten Ausführungsbeispiel ist vorgesehen, dass der Steuerblock zusätzlich ein Load-Sensing-Anschluss aufweist, der auf die Eingangsseite der Steuerventile führt. Über den genannten Load-Sensing-Anschluss lässt sich im Bedarfsfall die Druckversorgung für das Federungssystem durch Ansteuern einer Schwenkpumpe, lastabhängig regeln und/oder über den Load-Sensing-Anschluss lassen sich bedarfsweise weitere hydraulische Komponenten mit Fluid versorgen.

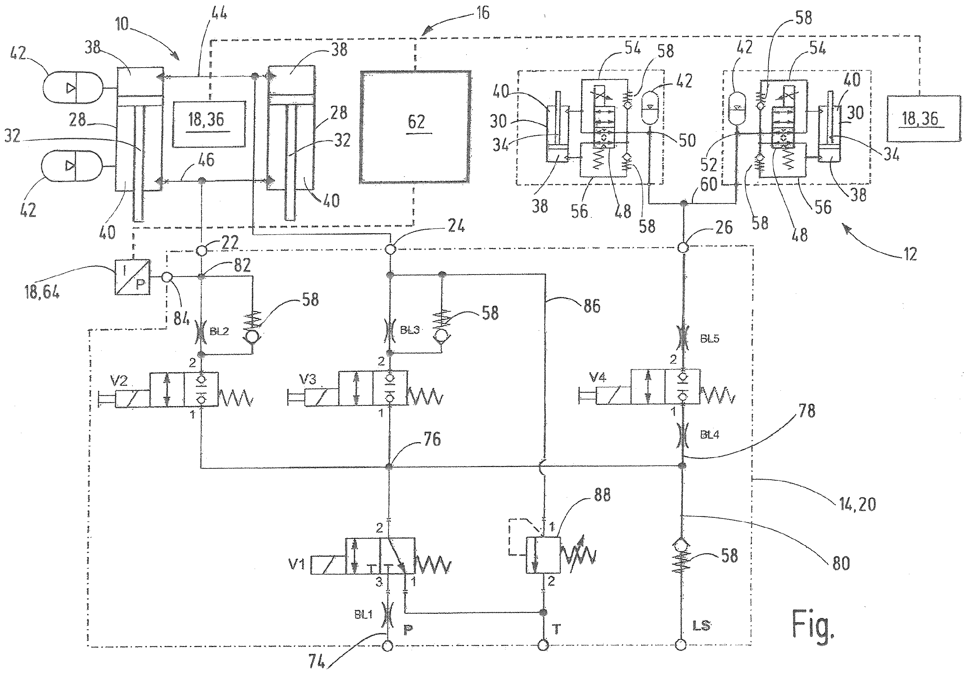

Im Folgenden wird ein erfindungsgemäßes, hydropneumatisches Federungssystem anhand der Zeichnung näher erläutert. Dabei zeigt die einzige Figur in nicht maßstäblicher Darstellung in der Art eines hydraulischen Schaltplans das erfindungsgemäße hydropneumatische Federungssystem.

Die einzige Figur zeigt ein erfindungsgemäßes, hydropneumatisches Federungssystem für Fahrzeuge. Das Federungssystem weist eine Achsfederung 10 und eine Kabinenfederung 12 auf, die gemeinsam mittels einer Ansteuereinrichtung 14 des Federungssystems ansteuerbar sind. Zur Versorgung der Achsfederung 10 und der Kabinenfederung 12 mit Druckfluid ist das Federungssystem an eine in den Figuren nicht dargestellte Druckversorgungsquelle anschließbar, wobei mittels einer Prioritätserkennung 16 als Teil des Federungssystems unter Einbezug einer Sensoreinrichtung 18 für die jeweilige Federung 10, 12 bedarfsabhängig vorrangig die eine Federung 10, 12 vor der jeweils anderen Federung 12, 10 mit Druckfluid versorgt ist.

Die Ansteuereinrichtung 14 ist aus nur einem einzelnen Steuerblock 20 gebildet. Der Steuerblock 20 weist einen ersten 22 und einen zweiten 24 Nutzanschluss, an die die Achsfederung 10 angeschlossen ist, und einen dritten Nutzanschluss 26 auf, an den die Kabinenfederung 12 angeschlossen ist. Zudem sind an dem Steuerblock 20 ein Druckversorgungsanschluss P und ein Load-Sensing-Anschluss LS, jeweils zum Anschluss an die Druckversorgungsquelle, sowie ein Rücklaufanschluss T vorgesehen.

Die Achsfederung 10 und die Kabinenfederung 12 weisen jeweils zwei hydraulische Arbeitszylinder 28, 30 auf. Der Verfahrweg der beiden Kolben-Stangeneinheiten 32, 34 der Arbeitszylinder 28, 30 der jeweiligen Federung 10, 12 wird gemeinsam von jeweils einem Wegsensor 36 überwacht. Auch ist es denkbar, dass der Verfahrweg jeder Kolben-Stangeneinheit 32, 34 der Arbeitszylinder 28, 30 von jeweils einem, in den Figuren nicht dargestellten Wegsensormodul überwacht wird, wobei die beiden Wegsensormodule zusammen den Wegsensor 36 der jeweiligen Federung 10, 12 bilden. Die Wegsensoren 36 sind Teil der Sensoreinrichtung 18, die Teil des Federungssystems ist.

Jeder Arbeitszylinder 28, 30 der Achsfederung 10 und der Kabinenfederung 12 weist einen Kolbenraum 38 und einen Stangenraum 40 auf.

An den Kolbenraum 38 und den Stangenraum 40 eines Arbeitszylinders 28 der Achsfederung 10 ist mit seiner Fluidseite jeweils ein Hydrospeicher 42 angeschlossen, die das Feder-Dämpfer-Verhalten für diesen Arbeitszylinder 28 vorgeben. Die beiden Kolbenräume 38 der Arbeitszylinder 28 der Achsfederung 10 sind über eine erste Fluidleitung 44 sowie die beiden Stangenräume 40 über eine zweite Fluidleitung 46 jeweils permanent fluidführend miteinander verbunden.

Der Kolbenraum 38 und der Stangenraum 40 jedes Arbeitszylinders 30 der Kabinenfederung 12 sind gemeinsam an jeweils einen zugeordneten Hydrospeicher 42 über jeweils ein 4/2-Wege-Proportionalventil 48 angeschlossen, dessen Ventilkolben mit einstellbarer Schließkraft elektromagnetisch angesteuert entgegen der Kraft einer Druckfeder von einer in der Fig. gezeigten ersten Stellung in eine zweite Stellung bringbar ist. Dabei ist der Stangenraum 40 des jeweiligen Arbeitszylinders 30 mit einem ersten Anschluss 48.1 des jeweiligen Proportionalventils 48 und der Kolbenraum 38 dieses Arbeitszylinders 30 mit einem zweiten Anschluss 48.2 des jeweiligen Proportionalventils 48 fluidführend verbunden. Des Weiteren weist das jeweilige Proportionalventil 48 einen dritten 48.3 und einen vierten 48.4 Anschluss auf, die beide fluidführend mit einem ersten 50 bzw. zweiten 52 Verzweigungspunkt verbunden sind. An den jeweiligen Verzweigungspunkt 50, 52 ist der Hydrospeicher 42 sowie über eine dritte Fluidleitung 54 der Stangen- 40 und über eine vierte Fluidleitung 56 der Kolbenraum 38 des jeweiligen zugeordneten Arbeitszylinders 30 angeschlossen. In der dritten 54 und der vierten 56 Fluidleitung ist jeweils ein Rückschlagventil 58 vorgesehen, das in Fluidflussrichtung des jeweiligen Arbeitszylinderraumes 38, 40 entgegen der Kraft einer Druckfeder öffnet. Die beiden Verzweigungspunkte 50, 52 der Kabinenfederung 12 sind über eine fünfte Fluidleitung 60 miteinander fluidführend verbunden. Der jeweilige Hydrospeicher 42 gibt mit seiner gasseitigen Vorspannung das Feder-Dämpfer-Verhalten für den jeweiligen Arbeitszylinder 30 der Kabinenfederung vor.

In der ersten, in der Fig. gezeigten Endstellung des Ventilkolbens des jeweiligen Proportionalventils 48 der Kabinenfederung 12 ist der erste Anschluss 48.1 mit dem dritten Anschluss 48.3 und der zweite 48.2 mit dem vierten 48.4 Anschluss über jeweils eine Drossel aufweisende Fluidverbindung fluidführend verbunden. In der zweiten Endstellung ist der erste Anschluss 48.1 mit dem dritten Anschluss 48.3 und der zweite 48.2 mit dem vierten 48.4 Anschluss über jeweils eine strömungsverengungsfreie Fluidverbindung fluidführend verbunden.

Die Prioritätserkennung 16 weist eine Steuereinheit in Form einer Rechnereinheit 62 auf, auf der Software installiert ist zum Auswerten der Sensordaten der Sensoreinrichtung 18 und zum Ansteuern der Ansteuereinrichtung 14 basierend auf den ausgewerteten Sensordaten. Die Sensoreinrichtung 18 weist die Wegsensoren 36 und eine Drucküberwachungseinrichtung 64 zum Ermitteln des Fluiddrucks in einem Teil des hydraulischen Versorgungskreises der Ansteuereinrichtung 14 auf, die jeweils eingangsseitig an die Rechnereinheit 62 angeschlossen sind.

Die Ansteuereinrichtung 14, die ein Teil der Prioritätserkennung 16 ist, weist ein erstes V2 und ein zweites V3 Steuerventil, die die Arbeitszylinder 28 der Achsfederung 10 mit Druckfluid versorgen, und ein drittes Steuerventil V4 auf, das die Arbeitszylinder 30 der Kabinenfederung 12 mit Druckfluid versorgt. Jedes Steuerventil V2, V3, V4 ist als 2/2-Wege-Schaltventil ausgebildet. Zudem weist die Ansteuereinrichtung 14 ein Zentralventil V1 in Form eines 3/2-Wege-Schaltventiles auf, das jedes Steuerventil V2, V3, V4 mit Druckfluid versorgt.

Das Zentralventil V1 ist mit seinem ersten Anschluss V1.1 mit dem Rücklaufanschluss T des Steuerblocks 20 und mit seinem dritten Anschluss V1.3 über eine sechste Fluidleitung 74 mit dem Druckversorgungsanschluss P des Steuerblocks 20 fluidführend verbunden. Ein zweiter Anschluss V1.2 des Zentralventils V1 ist mit einem dritten Verzweigungspunkt 76 fluidführend verbunden, der mit jeweils einem ersten Anschluss V2.1, V3.1 des ersten V2 und des zweiten V3 Steuerventils und über eine siebte Fluidleitung 78 mit einem ersten Anschluss V4.1 des dritten Steuerventils V4 fluidführend verbunden ist. Der dritte Verzweigungspunkt 76 ist über eine achte Fluidleitung 80 zudem mit dem Load-Sensing-Anschluss LS des Steuerblocks 20 fluidführend verbunden. Der Ventilkolben des Zentralventils V1 ist elektromagnetisch angesteuert entgegen der Kraft einer Druckfeder von einer in der Fig. gezeigten ersten Schaltstellung in eine zweite Schaltstellung bringbar. In der ersten Schaltstellung ist der zweite Anschluss V1.2 des Zentralventils V1 mit seinem ersten Anschluss V1.1 strömungsverengungsfrei fluidführend verbunden, wobei der dritte Anschluss V1.3 des Zentralventils V1 getrennt ist. In der zweiten Schaltstellung ist der zweite Anschluss V1.2 des Zentralventils V1 mit dem dritten Anschluss V1.3 fluidführend verbunden, wobei der erste Anschluss V1.1 getrennt ist.

Das erste Steuerventil V2 ist mit seinem zweiten Anschluss V2.2 an einen vierten Verzweigungspunkt 82 angeschlossen, der mit dem ersten Nutzanschluss 22 des Steuerblocks 20 und einem Steuerblock-Anschluss 84 für die Drucküberwachungseinrichtung 64 fluidführend verbunden ist. Der erste Nutzanschluss 22 ist mit der zweiten Fluidleitung 46 der Achsfederung 10 fluidführend verbunden. An den Anschluss 84 für die Drucküberwachungseinrichtung 64 ist die Drucküberwachungseinrichtung 64 in Form eines Druck-zu-Strom-Wandlers angeschlossen. Das zweite Steuerventil V3 ist mit seinem zweiten Anschluss V3.2 an den zweiten Nutzanschluss 24 des Steuerblocks 20 angeschlossen, der mit der ersten Fluidleitung 44 der Achsfederung 10 fluidführend verbunden ist. Das dritte Schaltventil V4 ist mit seinem zweiten Anschluss V4.2 an den dritten Nutzanschluss 26 des Steuerblocks 20 angeschlossen, der mit der fünften Fluidleitung 60 der Achsfederung 10 fluidführend verbunden ist. Die Ventilkolben des ersten V2, des zweiten V3 und des dritten V4 Schaltventils sind jeweils elektromagnetisch angesteuert entgegen der Kraft einer Druckfeder von einer in der Fig. gezeigten ersten Schaltstellung in eine zweite Schaltstellung bringbar. In der ersten Schaltstellung ist der erste Anschluss V2.1, V3.1, V4.1 des jeweiligen Schaltventils V2, V3, V4 von dem zweiten Anschluss V2.2, V3.2, V4.2 getrennt, wohingegen in der zweiten Schaltstellung diese Anschlüsse strömungsverengungsfrei miteinander fluidführend verbunden sind.

Die Rechnereinheit 62 ist zum individuellen Ansteuern des jeweiligen Ventils V1 bis V4, 48 ausgangsseitig jeweils mit dem Zentralventil V1, dem ersten V2, dem zweiten V3 und dem dritten V4 Steuerventil sowie den beiden Proportionalventilen 48 der Kabinenfederung 12 elektrisch verbunden.

In der sechsten Fluidleitung 74 zwischen dem Druckversorgungsanschluss P des Steuerblocks 20 und dem dritten Anschluss V1.3 des Zentralventils V1 ist eine erste Drossel BL1 vorgesehen. In die Fluidleitung zwischen dem zweiten Anschluss V2.2 des ersten Steuerventils V2 und dem vierten Verzweigungspunkt 82 ist eine zweite Drossel BL2 und in die Fluidleitung zwischen dem zweiten Anschluss V3.2 des zweiten Steuerventils V3 und dem zweiten Nutzanschluss 24 ist eine dritte Drossel BL3 geschaltet. Eine vierte Drossel BL4 ist in der siebten Fluidleitung 78 zwischen dem dritten Verzweigungspunkt 76 und dem ersten Anschluss V4.1 des dritten Steuerventils V4 vorgesehen. In die Fluidleitung zwischen dem zweiten Anschluss V4.2 des dritten Steuerventils V4 und dem dritten Nutzanschluss 26 ist eine fünfte Drossel BL5 geschaltet. Die jeweilige zweite bis fünfte Drossel BL2 bis BL5 dient insbesondere zur Verzögerung der Abfuhr von Druckfluid aus dem jeweiligen Arbeitszylinder 28, 30.

Parallel zu der zweiten Drossel BL2 ist zwischen dem zweiten Anschluss V2.2 des ersten Steuerventils V2 und dem vierten Verzweigungspunkt 82 ein Rückschlagventil 58 vorgesehen, das in Richtung des vierten Verzweigungspunktes 82 entgegen der Kraft einer Druckfeder öffnet. Parallel zu der dritten Drossel BL3 ist zwischen dem zweiten Anschluss V3.2 des zweiten Steuerventils V3 und dem zweiten Nutzanschluss 24 ein Rückschlagventil 58 geschaltet, das in Richtung des zweiten Nutzanschlusses 24 entgegen der Kraft einer Druckfeder öffnet. In die achte Fluidleitung 80 ist zwischen dem dritten Verzweigungspunkt 76 und dem Load-Sensing-Anschluss LS des Steuerblocks 20 ein Rückschlagventil 58 eingebracht, das in Richtung des Load-Sensing-Anschlusses LS entgegen der Kraft einer Druckfeder öffnet.

In eine neunte Fluidleitung 86 ist zwischen dem zweiten Nutzanschluss 24 und dem Rücklaufanschluss T ein einstellbares Druckbegrenzungsventil 88 geschaltet, das eingangsseitig mit dem zweiten Nutzanschluss 24 und ausgangsseitig mit dem Rücklaufanschluss T fluidführend verbunden ist.

Im Folgenden wird die Funktion des erfindungsgemäßen Federungssystems näher erläutert:
Ermittelt die Rechnereinheit 62 in Abhängigkeit der Messwerte zumindest einer der Wegsensoren 36 und gegebenenfalls der Drucküberwachungseinrichtung 64, dass die Achsfederung 10 und/oder die Kabinenfederung 12 einen Bedarf an Druckfluid hat, dann wird das Zentralventil V1, falls sich dieses nicht bereits in seiner zweiten Schaltstellung befindet, von der Rechnereinheit 62 derart angesteuert, dass sich der Ventilkolben des Zentralventils V1 in seine zweite Schaltstellung begibt. Dadurch wird jedes Steuerventil V2, V3, V4 über das Zentralventil V1 und den dritten Verzweigungspunkt 76 mit Druckfluid versorgt.

Je nach Bedarf an Druckfluid der jeweiligen Federung 10, 12 wird dann das jeweilige Steuerventil V2, V3, V4 von der Rechnereinheit 62 derart angesteuert, dass sich dessen Ventilkolben von seiner ersten Schaltstellung in seine zweite Schaltstellung begibt, wodurch der jeweilige Arbeitszylinder 28, 30 der jeweiligen Federung 10,12 mit Druckfluid versorgt wird. Dabei wird diejenige der Federung 10, 12 mit dem größeren Bedarf an Druckfluid priorisiert versorgt.

Ist das erste Steuerventil V2 in seiner zweiten Schaltstellung angeordnet, wird der Stangenraum 40 beider Arbeitszylinder 28 der Achsfederung 10 über das Zentralventil V1 und das erste Steuerventil V2 gleichzeitig mit Druckfluid versorgt, so dass die Kolben-Stangeneinheiten 32 der Arbeitszylinder 28 einfahren. Gleichzeitig wird das Fluid in dem jeweiligen Kolbenraum 38 zumindest teilweise in den an die Kolbenräume 38 angeschlossenen Hydrospeicher 42 verdrängt. Ist das zweite Steuerventil V3 in seiner zweiten Schaltstellung angeordnet, wird der Kolbenraum 38 beider Arbeitszylinder 28 der Achsfederung 10 über das Zentralventil V1 und das zweite Steuerventil V3 gleichzeitig mit Druckfluid versorgt, so dass die Kolben-Stangeneinheiten 32 der Arbeitszylinder 28 ausfahren. Gleichzeitig wird das Fluid in dem jeweiligen Stangenraum 40 zumindest teilweise in den an die Stangenräume 40 angeschlossenen Hydrospeicher 42 verdrängt. Ist das dritte Steuerventil V4 in seiner zweiten Schaltstellung angeordnet, wird der Kolben 38- und der Stangenraum 40 beider Arbeitszylinder 30 der Kabinenfederung 12 gleichzeitig mit Druckfluid versorgt.

Zur Abfuhr von Druckfluid aus den Kolbenräumen 38 und/oder Stangenräumen 40 der Arbeitszylinder 28, 30 der jeweiligen Federung 10, 12 wird bei Anordnung des Ventilkolbens des jeweiligen Steuerventils V2, V3, V4 in seiner zweiten Schaltstellung das Zentralventil V1 mittels der Rechnereinheit 62 derart angesteuert, dass sich der Ventilkolben des Zentralventils V1 in die erste Schaltstellung begibt, in der das Zentralventil V1 den dritten Verzweigungspunkt 76 mit dem Rücklaufanschluss T verbindet.

Übersteigt der Fluiddruck am zweiten Nutzanschluss 24 einen vorgebbaren Schwellenwert, wird dieser Druck über die neunte Fluidleitung 86 mittels des Druckbegrenzungsventils 88 zum Rücklaufanschluss T hin abgebaut.

## Patentansprüche

1. Hydropneumatisches Federungssystem für Fahrzeuge, zumindest bestehend aus einer Achsfederung (10) und einer Kabinenfederung (12), die zu ihrer Versorgung mit Druckfluid an eine Druckversorgungsquelle anschließbar sind, wobei mittels einer Ansteuereinrichtung (14) gemeinsam sowohl die Achsfederung (10) als auch die Kabinenfederung (12) ansteuerbar sind, **dadurch gekennzeichnet, dass** mittels einer Prioritätserkennung (16) unter Einbezug einer Sensoreinrichtung (18) für die jeweilige Federung (10, 12), bedarfsabhängig vorrangig die eine Federung (10, 12) vor der jeweils anderen Federung (12, 10) mit Druckfluid versorgt ist.

2. Federungssystem nach Anspruch 1, **dadurch gekennzeichnet, dass** die Ansteuereinrichtung (14) aus einem einzelnen Steuerblock (20) gebildet ist mit mindestens jeweils einem Nutzanschluss (22, 24, 26) für die zugehörige Federung (10, 12) sowie einem Druckversorgungs- (P) und einem Rücklaufanschluss (T).

3. Federungssystem nach Anspruch 1 oder 2, **dadurch gekennzeichnet, dass** die jeweilige Federung (10, 12) mindestens einen hydraulischen Arbeitszylinder (28, 30) mit einer Kolben-Stangeneinheit (32, 34) aufweist, deren Position mittels der Sensoreinrichtung (18) in Form mindestens eines Wegsensors (36) überwacht ist.

4. Federungssystem nach einem der vorstehenden Ansprüche, **dadurch gekennzeichnet, dass** sowohl der Kolben- (38) als auch der Stangenraum (40) eines Arbeitszylinders (28, 30) flüssigkeitsseitig an mindestens einen Hydrospeicher (42) angeschlossen sind, der mit seiner gasseitigen Vorspannung das Feder-Dämpfer-Verhalten für den jeweiligen Arbeitszylinder (28, 30) vorgibt.

5. Federungssystem nach einem der vorstehenden Ansprüche, **dadurch gekennzeichnet, dass** die Prioritätserkennung (16) zwecks Ansteuern der Ansteuereinrichtung (14) für die Arbeitszylinder (28, 30) über eine Rechnereinheit (62) verfügt, die die Sensordaten der Sensoreinrichtung (18) auswertet, die vorzugsweise neben den Wegsensoren (36) mindestens eine Drucküberwachungseinrichtung (64) für zumindest Teile des hydraulischen Versorgungskreises der Steuereinrichtung (20) aufweist.

6. Federungssystem nach einem der vorstehenden Ansprüche, **dadurch gekennzeichnet, dass** die Steuereinrichtung (20) über einzelne Steuerventile (V2, V3, V4), vorzugsweise 2/2-Wegeventile, verfügt, die einem jeweiligen Arbeitszylinder (28, 30) zugeordnet von einem Zentralventil (V1), vorzugsweise in Form eines 3/2-Wegeventiles, ausgehend versorgt sind.

7. Federungssystem nach einem der vorstehenden Ansprüche, **dadurch gekennzeichnet, dass** die Arbeitszylinder (28, 30) sowohl kolben- als auch stangenseitig permanent fluidführend miteinander verbunden sind und dass für die Zu- und Abfuhr von Fluid betreffend die Achsfederung (10) die Arbeitszylinder (28) sowohl kolben- als auch stangenseitig an jeweils ein Steuerventil (V2, V3) angeschlossen sind.

8. Federungssystem nach einem der vorstehenden Ansprüche, **dadurch gekennzeichnet, dass** die Kabinenfederung (12) mittels eines weiteren Steuerventiles (V4) ausgehend von dem Zentralventil (V1) mit Fluid versorgbar ist oder eine Druckentlastung in Richtung des Rücklaufanschlusses (T) erfährt.

9. Federungssystem nach einem der vorstehenden Ansprüche, **dadurch gekennzeichnet, dass** die Druckfluidversorgung des jeweiligen Arbeitszylinders (28, 30) nach Betätigen des zuordenbaren Steuerventiles (V2, V3, V4) mit dem Druck der Druckversorgungsquelle erfolgt und dass zwecks Abfuhr von Druckfluid aus dem jeweiligen Arbeitszylinder (28, 30) dies über eine Blende oder Drossel (BL2 bis BL5) verzögert erfolgt.

10. Federungssystem nach einem der vorstehenden Ansprüche, **dadurch gekennzeichnet, dass** der Steuerblock (20) zusätzlich einen Load-Sensing-Anschluss (LS) aufweist, der auf die Eingangsseite der Steuerventile (V2, V3, V4) führt.

## Claims

1. Hydropneumatic suspension system for vehicles, consisting at least of an axle suspension (10) and a cab suspension (12), which can be connected to a pressure supply source for supplying them with pressurised fluid, wherein both the axle suspension (10) and the cab suspension (12) can be controlled together by means of an actuating device (14), **characterised in that**, by means of a priority identification (16) including a sensor device (18) for the respective suspension (10, 12), the one suspension (10, 12) is supplied as a priority with pressurised fluid before the respective other suspension (12, 10) depending on requirements.

2. Suspension system according to claim 1, **characterised in that** the actuating device (14) is formed of a single control block (20) with at least one work port (22, 24, 26) in each case for the associated suspension (10, 12) as well as with a pressure supply port (P) and a return port (T).

3. Suspension system according to claim 1 or 2, **characterised in that** the respective suspension (10, 12) comprises at least one hydraulic working cylinder (28, 30) having a piston/rod unit (32, 34), the position of which is monitored by means of the sensor device (18) in the form of at least one position sensor (36).

4. Suspension system according to one of the preceding claims, **characterised in that** both the piston chamber (38) and the rod chamber (40) of a working cylinder (28, 30) are connected on the fluid side to at least one hydraulic accumulator (42) which, with its gas-side pre-load, specifies the spring/damper behaviour for the respective working cylinder (28, 30).

5. Suspension system according to one of the preceding claims, **characterised in that** the priority identification (16), for the purpose of controlling the actuating device (14) for the working cylinders (28, 30), has a computer unit (62) which evaluates the sensor data of the sensor device (18) which sensor device preferably has, in addition to the position sensors (36), at least one pressure monitoring device (64) for at least parts of the hydraulic supply circuit of the control device (20).

6. Suspension system according to one of the preceding claims, **characterised in that** the control device (20) has individual control valves (V2, V3, V4), preferably 2/2-way valves, which valves, assigned to a respective working cylinder (28, 30), are supplied starting from a central valve (V1), preferably in the form of a 3/2-way valve.

7. Suspension system according to one of the preceding claims, **characterised in that** the working cylinders (28, 30) are permanently fluidically connected to each other on both the piston side and the rod side and **in that** the working cylinders (28) are each connected to a control valve (V2, V3) both on the piston side and the rod side for the supply and discharge of fluid relating to the axle suspension (10).

8. Suspension system according to one of the preceding claims, **characterised in that** the cab suspension (12), starting from the central valve (V1), can be supplied with fluid by means of a further control valve (V4) or undergoes pressure relief in the direction of the return port (T).

9. Suspension system according to one of the preceding claims, **characterised in that** the pressurised fluid supply of the respective working cylinder (28, 30) takes place after actuating the assignable control valve (V2, V3, V4) with the pressure of the pressure supply source and **in that**, for the purpose of discharging pressurised fluid from the respective working cylinder (28, 30), this takes place in a delayed manner via an orifice or throttle (BL2 to BL5).

10. Suspension system according to one of the preceding claims, **characterised in that** the control block (20) additionally comprises a load-sensing port (LS) which leads to the input side of the control valves (V2, V3, V4).

## Revendications

1. Système hydropneumatique de suspension pour des véhicules, composé d'au moins une suspension (10) d'essieu et d'une suspension (12) de cabine, qui, pour leur alimentation en fluide sous pression, peuvent être raccordées à une source d'alimentation en pression, dans lequel, tant la suspension (10) d'essieu qu'également la suspension (12) de cabine peuvent être commandées en commun au moyen d'un dispositif (14) de commande, **caractérisé en ce qu'**au moyen d'une détection (16) de priorité, y compris un dispositif (18) capteur, on alimente en fluide sous pression, en fonction des besoins pour la suspension (10, 12) respective, prioritairement l'une (10, 12) des suspensions avant l'autre (12, 10) suspension.

2. Système de suspension suivant la revendication 1, **caractérisé en ce que** le dispositif (14) de commande est formé d'un seul bloc (20) de commande ayant au moins respectivement un raccord (22, 24, 26) utile pour la suspension (10, 12), qui lui appartient, ainsi qu'un raccord (P) d'alimentation en pression et un raccord (T) de retour.

3. Système de suspension suivant la revendication 1 ou 2, **caractérisé en ce que** la suspension (10, 12) respective a au moins un cylindre (28, 30) de travail hydraulique ayant une unité (32, 34) piston-tige, dont la position est contrôlée au moyen du dispositif (18) capteur sous la forme d'au moins un capteur (36) de déplacement.

4. Système de suspension suivant l'une des revendications précédentes, **caractérisé en ce que** tant l'espace (38) de piston qu'également l'espace (40) de tige d'un cylindre (28, 30) de travail sont raccordés du côté du liquide à au moins un accumulateur (42) hydraulique, qui prescrit, par sa précontrainte du côté du gaz, le comportement de ressort-amortisseur pour le cylindre (28, 30) de travail respectif.

5. Système de suspension suivant l'une des revendications précédentes, **caractérisé en ce que** la détection (16) de priorité dispose, en vue de commander le dispositif (14) de commande des cylindres (28, 30) de travail, d'une unité (62) informatique, qui analyse les données de capteur du dispositif (18) capteur, qui a, de préférence outre les capteurs (36) de déplacement, au moins un dispositif (64) de contrôle de la pression pour au moins des parties du circuit hydraulique d'alimentation du dispositif (20) de commande.

6. Système de suspension suivant l'une des revendications précédentes, **caractérisé en ce que** le dispositif (20) de commande dispose de diverses soupapes (V2, V3, V4) pilotes, de préférence des soupapes à 2/2 voies, qui, associées à un cylindre (28, 30) de travail respectif, sont alimentées à partir d'une soupape (V1) centrale, de préférence sous la forme d'une soupape à 3/2 voies.

7. Système de suspension suivant l'une des revendications précédentes, **caractérisé en ce que** les cylindres (28, 30) de travail communiquent entre eux fluidiquement d'une manière permanente, tant du côté du piston qu'également du côté de la tige et **en ce que**, pour l'entrée et la sortie de fluide, en ce qui concerne la suspension (10) d'essieu, les cylindres (28) de travail sont raccordés, tant du côté du piston qu'également du côté de la tige, respectivement à une soupape (V2, V3) pilote.

8. Système de suspension suivant l'une des revendications précédentes, **caractérisé en ce que** la suspension (12) de cabine peut être alimentée en fluide à partir de la soupape (V1) centrale au moyen d'une autre soupape (V4) pilote ou subit une détente de pression dans la direction du raccord (T) de retour.

9. Système de suspension suivant l'une des revendications précédentes, **caractérisé en ce que** l'alimentation en fluide sous pression du cylindre (28, 30) de travail respectif s'effectue après actionnement de la soupape (V2, V3, V4) pilote, qui peut lui être associée, en la pression de la source d'alimentation en pression et **en ce que**, en vue d'évacuer du fluide sous pression du cylindre (28, 30) de travail respectif, cela s'effectue de manière retardée par un diaphragme ou un étranglement (BL2 à BL5).

10. Système de suspension suivant l'une des revendications précédentes, **caractérisé en ce que** le bloc (20) de commande a en outre un raccord (LS) load-sensing, qui conduit au côté d'entrée des soupapes (V2, V3, V4) pilotes.
